# EUROPEAN PATENT SPECIFICATION

(11) **EP 2 610 285 B1**
(45) Date of publication and mention of the grant of the patent: **06.04.2016**
(21) Application number: 12197543.7
(22) Date of filing: 17.12.2012
(51) Int. Cl.: C08J 7/04, C08L 69/00

(54) **Plastic glazing and method of preparing the same**
Kunststoffverglasung und Herstellungsverfahren dafür
Vitrage synthétique et son procédé de préparation

(30) Priority: 30.12.2011 KR 20110147625
(43) Date of publication of application: 03.07.2013
(73) Proprietor: CHEIL INDUSTRIES INC., Gumi-si, Gyeongsangbuk-do 730-710 (KR)
(72) Inventor: Chi, Jun Ho, Uiwang-si, Gyeonggi-do 730-710 (KR); Hur, Jong Chan, Uiwang-si, Gyeonggi-do 730-710 (KR); Kwon, O sung, Uiwang-si, Gyeonggi-do 730-710 (KR); Lee, Dong Geun, Uiwang-si, Gyeonggi-do 730-710 (KR); Kwon, Hyuck Man, Uiwang-si, Gyeonggi-do 730-710 (KR); Jang, Bok Nam, Uiwang-si, Gyeonggi-do 730-710 (KR)
(74) Representative: Lang, Johannes

(56) References cited:
- US-A1- 2004 013 882
- US-A1- 2005 031 855
- US-A1- 2007 009 741
- DATABASE WPI Week 200259 Thomson Scientific, London, GB; AN 2002-551379 XP002695643, & JP 2002 069219 A (TEIJIN KASEI LTD) 8 March 2002 (2002-03-08)
- DATABASE WPI Week 200433 Thomson Scientific, London, GB; AN 2004-350346 XP002695644, & JP 2004 035614 A (TEIJIN KASEI LTD) 5 February 2004 (2004-02-05)

## Description

The present invention relates to a plastic glazing and a method of preparing the same. More particularly, the present invention relates to a plastic glazing and a method of preparing the same, which contains a certain amount of biphenyl structure in a base layer to improve interface stability between coating layers, thereby providing excellent reliability and solvent resistance.

Polycarbonate is a representative thermoplastic material having a heat deflection temperature of 135°C and exhibits a good balance of properties such as transparency, impact resistance, self-extinguishing property, dimensional stability, heat resistance, and the like to be used in a wide range of application including electric/electronic products, office equipment, automobile components, and the like.

Recently, polycarbonate is widely applied to a glazing material for vehicles based on excellent impact resistance, transparency, and formability thereof. Accordingly, since many years ago, various attempts have been made to use polycarbonate as a substituent for metal and glass articles in the vehicle industry. With merits of excellent impact resistance, optical transmittance, and formability enabling various designs, polycarbonate provides new usage to a vehicle glazing system. Particularly, when polycarbonate components are applied to a vehicle instead of glass components, the center of gravity of the vehicle is lowered, enabling safer driving. In addition, reduction in the weight of the vehicle through application of polycarbonate improves fuel efficiency, thereby ensuring economic feasibility.

However, in order to use polycarbonate as a candidate material for glass, it has been endeavored to enhance scratch resistance and wear resistance of polycarbonate. Such endeavor can be generally divided into two kinds of challenges, that is, improving a polycarbonate matrix itself and adding a layer for imparting functionality on the polycarbonate matrix. Most inventions in the art are focused on improvement of a stack structure on the polycarbonate matrix and impartment of functionality rather than development of a polycarbonate resin for application to glazing. Most polycarbonate resin inventions relate to preparation of polycarbonate resins through increase in the molecular weight of polycarbonate or through co-extrusion with copolymers. Recently, a polycarbonate resin containing additives for absorbing or blocking visible light or a polycarbonate resin having improved scratch resistance is often applied to glazing. However, despite such improvement of the polycarbonate resin, scratch resistance and wear resistance of polycarbonate for glazing are dependent on a coating liquid applied to the surface of the base. Thus, most techniques for preparing glazing polycarbonate concern improving scratch resistance and wear resistance through application of a functional layer, such as an acrylic or silicone coating liquid, to the base.

Essential characteristics for the polycarbonate resin to be used for glazing are scratch resistance and wear resistance. However, improvement of such characteristics has a practical limit only through development of the polycarbonate resin and thus has been challenged through addition of a functional layer. As a result, the scratch resistance and wear resistance of the glazing material has significantly improved, but there is still a challenge for ensuring interface stability between the polycarbonate base and the coating layer stacked thereon. It is generally known that the coating layer stacked on the polycarbonate base for improving scratch resistance and wear resistance is comprised of acrylic or silicon resins, the coefficient of linear thermal expansion of which is 40 cm/cm/°C and is much less than that of general polycarbonate having a coefficient of linear thermal expansion of 60∼65 cm/cm/°C. Namely, reduction in the coefficient of linear thermal expansion of polycarbonate is an essential factor in improving interface stability between the base and the coating layer but cannot be easily achieved due to the chemical structure of polycarbonate.

US 2005/031855 A1 refers to as multi-layer article containing a base layer containing a thermoplastic resin and a second layer containing a thermoplastic (co)polyformal superimposed over said base layer, wherein the polyformals or copolyformals are of a specific formula with diphenolate groups. US 2004/0013882 A1 discloses a multi-layer product comprising a coex layer and a base layer, wherein the coex layer contains a copolycarbonate of a specific formula and the base layer contains a polycarbonate with less chemical resistance that that of the copolycarbonate. Database WPI Week 200259, Thomson Scientific, London, GB, AN 2002-551379, XP-002695643 & JP 2002 069219 A discloses a molded article of polycarbonate resin composition containing specific low molecular compounds and having a hard coat treated on a surface. Database WPI Week 200433, Thomson Scientific, London, GB, AN 2004-350346, XP-002695644 & JP 2004 035614 A discloses a coated polycarbonate plate-shaped compact having a primer layer provided on surface(s) of the compact, and a hard-coat layer provided on the primer layer. US 2007/0009741 A1 refers to windows or other articles made from dimethyl bisphenol cyclohexane (DMBPC) polycarbonate homopolymer or copolymer.

Thus, it is the object of the present invention to overcome above disadvantages and to provide a plastic glazing and a method of preparing the same, which exhibits excellent properties in terms of interface adherence to a coating layer, solvent resistance, reliability, impact resistance, elongation, scratch resistance, and wear resistance.

The plastic glazing of the present invention includes a base layer; and a coating layer formed on one surface of the base layer, wherein the base layer comprises polycarbonate containing a biphenyl group and the biphenyl group is present in an amount of 10 mol% to 50 mol% based on the total amount of polycarbonate.

The polycarbonate containing a biphenyl group may include repeated structures of Formulae 1 and 2, and the repeated structure of Formula 1 and the repeated structure of Formula 2 may be present in a molar ratio of 50 to 90 : 10 to 50. 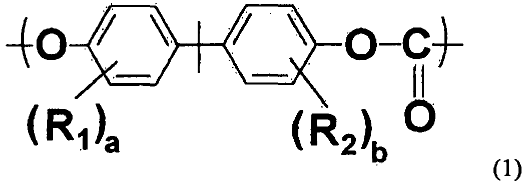 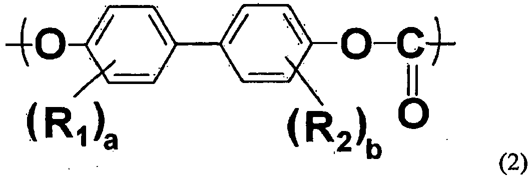 (wherein R₁ and R₂ are each independently halogen, a substituted or unsubstituted C₁ to C₆ alkyl group, or a substituted or unsubstituted C₆ to C₂₀ aryl group, and a and b are each independently an integer from 0 to 4).

The base layer may have a coefficient of linear thermal expansion ranging from 39 cm/cm/°C to 57 cm/cm/°C for a 6.4 mm flexural specimen according to ISO 11359.

Difference in coefficient of linear thermal expansion between the base layer and the coating layer may be 16 cm/cm/°C or less.

The coating layer has a stack structure of a primer layer and a hard coating layer, in which the primer layer contacts the base layer.

The primer layer may be comprised of at least one of organopolysiloxane, acrylic, polyester, and acryl-polyester blend resins.

The hard coating layer may be comprised of at least one of silicone, urethane, epoxy, acrylic, polysiloxane, and polycarbonate grafted polysiloxane resins.

The plastic glazing may further include an inorganic material layer formed on the surface of the hard coating layer. The inorganic material layer may be comprised of at least one of aluminum oxide, barium fluoride, boron nitride, hafnium oxide, lanthanum fluoride, magnesium fluoride, magnesium oxide, scandium oxide, silicon monoxide, silicon dioxide, silicon nitride, silicon oxynitride, silicon oxycarbide, hydrogenated silicon oxycarbide, silicon carbide, tantalum oxide, titanium oxide, tin oxide, indium tin oxide, yttrium oxide, zinc oxide, zinc selenide, zinc sulfide, zirconium oxide, and zirconium titanate.

Another aspect of the present invention provides a method of preparing a plastic glazing. The method include forming a base layer using a polycarbonate resin containing a biphenyl group; forming a primer layer on a surface of the base layer; and forming a hard coating layer on a surface of the primer layer.

In one embodiment, the method may further include depositing a layer of a compound on a surface of the hard coating layer. Here, the compound is at least one of aluminum oxide, barium fluoride, boron nitride, hafnium oxide, lanthanum fluoride, magnesium fluoride, magnesium oxide, scandium oxide, silicon monoxide, silicon dioxide, silicon nitride, silicon oxynitride, silicon oxycarbide, hydrogenated silicon oxycarbide, silicon carbide, tantalum oxide, titanium oxide, tin oxide, indium tin oxide, yttrium oxide, zinc oxide, zinc selenide, zinc sulfide, zirconium oxide, and zirconium titanate.
Fig. 1 is a side sectional view of a plastic glazing according to one embodiment of the present invention; and
Fig. 2 is a partially perspective view of a vehicle to which a plastic glazing according to one embodiment of the present invention is applied.

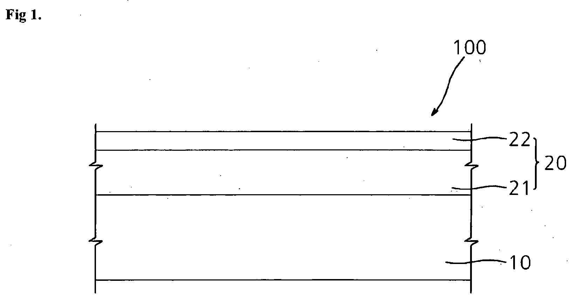

A plastic glazing according to the present invention includes a base layer, and a coating layer formed on one surface of the base layer. Fig. 1 is a side sectional view of a plastic glazing according to one embodiment of the present invention. Referring to Fig. 1, a coating layer 20 is formed on one surface of a base layer 10 and has a stack structure of a primer layer 21 and a hard coating layer 22. The primer layer 21 is interposed between the base layer 10 and the hard coating layer 22.

The plastic glazing according to this embodiment may be prepared by forming a base layer using a polycarbonate resin containing a biphenyl group; forming a primer layer on a surface of the base layer; and forming a hard coating layer on a surface of the primer layer. In one embodiment, the primer layer may be formed by coating and curing a primer on the surface of the base layer. Further, the hard coating layer may be formed by coating and curing a hard coating material on the surface of the cured primer layer.

### (A) Base layer

In this invention, the base layer is comprised of polycarbonate containing a biphenyl group. The biphenyl group is present in an amount of 10 mol% to 50 mol% based on the total amount of polycarbonate. If the amount of the biphenyl group is less than 10 mol%, the base layer may be peeled off and it is difficult to obtain desired solvent resistance and wear resistance. If the amount of the biphenyl group exceeds 50 mol%, there may be a problem of rapid deterioration in elongation and impact resistance. The amount of the biphenyl group is preferably in the range of 15 mol% to 45 mol%, more preferably in the range of 20 mol% to 40 mol%.

The polycarbonate containing a biphenyl group may include repeated structures of Formulae 1 and 2. 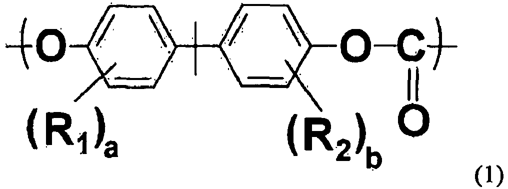 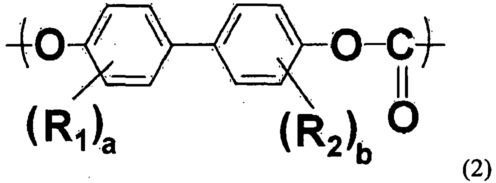 (wherein R₁ and R₂ are each independently halogen, a substituted or unsubstituted C₁ to C₆ alkyl group, or a substituted or unsubstituted C₆ to C₂₀ aryl group, and a and b are each independently an integer from 0 to 4).

In some embodiments, the polycarbonate containing a biphenyl group may be prepared through transesterification of diols represented by Formulae 1-1 and 2-1 and diaryl carbonate. 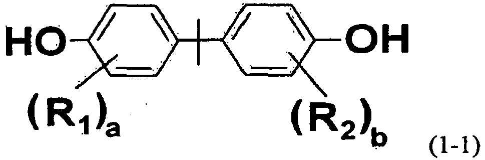 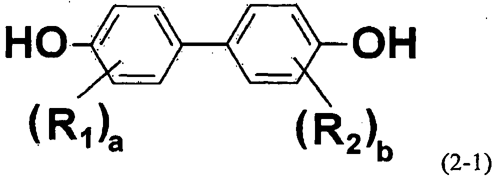 (wherein R₁, R₂, a, and b are the same as those defined in Formulae 1 and 2).

Examples of the diol represented by Formula 1-1 include 2,2-bis-(4-hydroxyphenyl)-propane, 2,2-bis-(3,5-dimethyl-4-hydroxyphenyl)-propane, and 2,2-bis-(3,5-diisopropyl-4-hydroxyphenyl)-propane. Preferably, 2,2-bis-(4-hydroxyphenyl)-propane called bisphenol-A is used.

Examples of the diol represented by Formula 2-1 include 4,4'-biphenol, 2,2'-dimethyl 4,4'-biphenyldiol, 3,3-dimethyl 4,4-dihydroxybiphenyl, and 2,2',6,6',-tetramethyl -4,4'-biphenol. Preferably, 4,4'-biphenol is used.

In some embodiments, the molar ratio of the diol represented by Formula 1-1 to the diol represented by Formula 2-1 (Formula 1-1 : Formula 2-1) may range from 50 to 90 : 10 to 50. In other words, the molar ratio of a repeated structure of Formula 1 and a repeated structure of Formula 2 may range from 50 to 90 : 10 to 50. Within this range, the plastic glazing can have a good balance of properties, such as impact resistance, chemical resistance, interface stability, wear resistance, scratch resistance, and weather resistance. Preferably, the molar ratio ranges from 55 to 85 : 15 to 45, more preferably from 60 to 80 : 20 to 40.

Examples of diaryl carbonate may include diphenyl carbonate, ditoryl carbonate, bis(chlorophenyl) carbonate, m-cresyl carbonate, dinaphthyl carbonate, bis(diphenyl) carbonate, diethyl carbonate, dimethyl carbonate, dibutyl carbonate, and dicyclohexyl carbonate, without being limited thereto. These may be used alone or in combination thereof. Preferably, diphenyl carbonate is used.

In some embodiments, the molar ratio (diol/diaryl carbonate) of the diols represented by Formula 1-1 and Formula 2-1 to the diaryl carbonate may range from 0.6 to 1.0, preferably from 0.7 to 0.9. Within this range, the plastic glazing exhibits excellent flowability, impact resistance and chemical resistance, and particularly, excellent heat resistance and room temperature impact resistance. In addition, the plastic glazing can secure a low index of refraction and thus can have excellent compatibility with other resins.

In this invention, the base layer may have a coefficient of linear thermal expansion ranging from 39 cm/cm/°C to 57 cm/cm/°C, preferably from 40 cm/cm/°C to 50 cm/cm/°C, for a 6.4 mm flexural specimen according to ISO 11359. As such, the base layer according to the present invention may provide excellent interface stability between the base layer and the coating layer having a coefficient of linear thermal expansion of 40 cm/cm/°C by minimizing difference in the coefficient of linear thermal expansion therebetween. The difference in the coefficient of linear thermal expansion between the base layer and the coating layer is preferably 16 cm/cm/°C or less, more preferably 5 cm/cm/°C or less.

The base layer typically has a thickness of 0.1 cm to 5 cm.

### (B) Coating layer

In this invention, the coating layer has a stack structure of a primer layer and a hard coating layer.

The primer layer serves as a coupling between the base layer and the hard coating layer thereon. The primer layer may be formed to a thickness of 5 *µ*m to 80 *µ*m by coating a primer on the surface of the base layer comprised of the polycarbonate containing a biphenyl group, or by coating and curing the primer thereon through film insert molding or the like. The primer layer may be constituted by a single layer or multiple layers. Any material publicly known to those skilled in the art in the art may be used as the material for the primer layer. For example, the primer layer may be formed of an organopolysiloxane, acrylic, polyester, or acryl-polyester blend resin primer.

The hard coating layer serves to improve scratch resistance of the base layer. The hard coating layer may be formed to a thickness of 10 *µ*m to 100 *µ*m by coating and curing a hard coating material on the surface of the primer layer through bar coating, spray coating, roll coating, flow coating, dip coating, and film insert molding. The hard coating layer may be constituted by a single layer or multiple layers. Within this thickness range, the hard coating layer provides excellent scratch resistance while providing a uniform coating surface.

The hard coating material may include silicone, urethane, epoxy, acrylic, polysiloxane, and polycarbonate grafted polysiloxane resins. In particular, when the base layer is formed of polycarbonate containing a certain amount of a biphenyl group, the plastic glazing can have further improved properties in terms of scratch resistance, transparency and wear resistance.

Curing may be carried out by heat curing or UV curing. Although UV curing is suited for products having small sizes, recent trend in the art concerns heat curing with increase in size of products.

After curing, a stack structure having the base layer, the primer layer and the hard coating layer sequentially stacked therein is formed. For example, a preform is prepared as the base layer by molding a polycarbonate resin containing a biphenyl group, and then the primer layer and the hard coating layer are sequentially formed on the base layer, thereby forming the stack structure. The preform comprised of the polycarbonate resin containing a biphenyl group may be obtained by any typical molding method, such as injection molding, and extraction molding. Preferably, the preform is formed by injection molding. The primer layer may be formed by coating and curing the primer. Further, the hard coating layer may be formed by coating and curing a hard coating material.

In terms of interface stability, the primer layer and the hard coating layer preferably have a coefficient of linear thermal expansion from 30 cm/cm/°C to 50 cm/cm/°C, more preferably from 32 cm/cm/°C to 40 cm/cm/°C. In addition, difference in coefficient of linear thermal expansion between the primer layer and the hard coating layer is preferably 5 cm/cm/°C or less, more preferably 3 cm/cm/°C or less, still more preferably 0 cm/cm/°C, to provide excellent dimensional stability.

In order to further improve scratch resistance, the coating layer may further include an inorganic material layer on the surface of the hard coating layer. Wherein, the inorganic material layer may be formed of at least one material of aluminum oxide, barium fluoride, boron nitride, hafnium oxide, lanthanum fluoride, magnesium fluoride, magnesium oxide, scandium oxide, silicon monoxide, silicon dioxide, silicon nitride, silicon oxynitride, silicon oxycarbide, hydrogenated silicon oxycarbide, silicon carbide, tantalum oxide, titanium oxide, tin oxide, indium tin oxide, yttrium oxide, zinc oxide, zinc selenide, zinc sulfide, zirconium oxide, and zirconium titanate.

The inorganic material layer may be formed by any method, such as vapor deposition, sputtering, plasma chemical deposition, sol-gel coating, coating, and plasma polymerization, known to those skilled in the art. Further, the inorganic material layer may be constituted by a single layer or multiple layers.

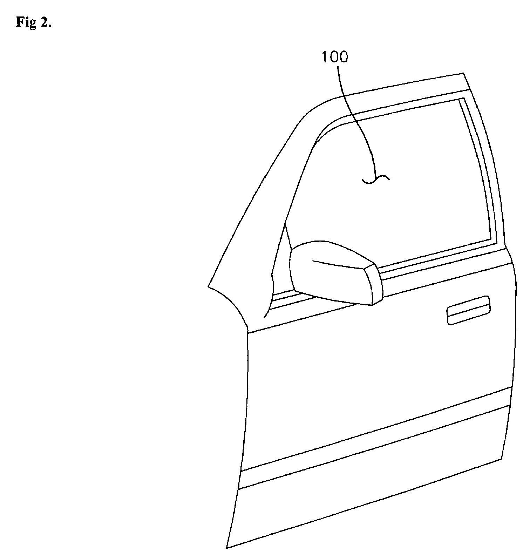

The plastic glazing according to the present invention exhibits excellent properties in terms of interface stability between the base layer and the coating layer, wear resistance, scratch resistance, reliability, weather resistance, solvent resistance, elongation and impact resistance. Thus, the plastic glazing according to this invention may be advantageously applied to vehicles. Fig. 2 is a partial perspective view of a vehicle to which a plastic glazing according to one embodiment of the present invention is applied. In Fig. 2, the plastic glazing is illustrated as being applied to a side window of the vehicle, but may be applied to front and rear windows thereof.

Next, the present invention will be explained in more detail with reference-to some examples and comparative examples. These examples are provided for illustration only and are not to be in any way construed as limiting the present invention. A description of details apparent to those skilled in the art will be omitted herein.

### Example

### Example 1

4.28 kg (18.7 mol) of 2,2-bis(4-hydroxyphenyl)propane (bisphenol A), 0.39 kg (2.1 mol) of 4,4'-biphenyl, 4.64 kg (21.6 mol) of diphenyl carbonate, 150 ppb of KOH (for 1 mol bisphenol A) were sequentially added to a reactor, followed by removal of oxygen from the reactor using nitrogen. The reactor was heated to 160°C and heated again to 190°C and kept there for 6 hours. The reactor was heated again to 210°C and kept there at 100 Torr for 1 hour. The reactor was heated to 260°C and kept there at 20 Torr for 1 hour, and then kept at 0.5 Torr for 1 hour. 0.03 phr of an antioxidant and 0.05 phr of a phosphorous-based heat stabilizer were added to a molten polymer, and uniformly stirred for 10 minutes.

The prepared polycarbonate resin was extruded at 270°C through a twin-screw extruder (L/D=36, ϕ=32) and formed into pellets using a pelletizer. A 3.0 mm thick specimen (15 mm x 15 mm) was obtained using the pellet through an injection machine (DHC 120WD, Donshin Hydraulic Pressure Co., Ltd., 120 ton) at a molding temperature of 270°C and a mold temperature of 90°C. On the specimen, a primer (Momentive AS4000) containing 2% of solid was deposited to a thickness of 60 *µ*m at room temperature and then cured. Then, a silicone hard coating material (Momentive AS4700) containing 20% of solid was coated to a thickness of 15 *µ*m thereon by flow coating, followed by curing using a UV lamp. Then, a 0.5 *µ*m thick silicon dioxide layer was formed thereon to prepare a polycarbonate glazing sample. The coating layer had an average coefficient of linear thermal expansion of 40 cm/cm/°C.

### Examples 2~5

The samples were prepared by the same method as in Example 1 except that the molar ratio of 2,2-bis(4-hydroxyphenyl)propane (bisphenol A) to 4,4'-biphenyl was changed as shown in the following Table 1.

### Comparative Example 1

4.76 kg of 2,2-bis(4-hydroxyphenyl)propane (bisphenol A), 4.64 kg of diphenyl carbonate, and 150 ppb of KOH (for 1 mol bisphenol A) were sequentially added to a reactor, followed by removal of oxygen from the reactor using nitrogen. The subsequent process was carried out by the same method as in Example 1.

### Comparative Examples 2∼3

The samples were prepared by the same method as in Example 1 except that the molar ratio of 2,2-bis(4-hydroxyphenyl)propane (bisphenol A) to 4,4'-biphenyl was changed as shown in the following Table 1.

**Table 1**

| | | Example | | | | | Comparative Example | | |
|---|---|---|---|---|---|---|---|---|---|
| | | 1 | 2 | 3 | 4 | 5 | 1 | 2 | 3 |
| Molar ratio between BPA and BP in base layer | BPA | 90 | 80 | 70 | 60 | 50 | 100 | 95 | 40 |
| | BP | 10 | 20 | 30 | 40 | 50 | - | 5 | 60 |

### Evaluation of physical properties

(1) Coefficient of linear thermal expansion(cm/cm/°C): The coefficient of linear thermal expansion was measured using a 6.4 mm flexural specimen in a temperature zone of -30∼110°C according to ISO 11359.
(2) Wear resistance testing: Variation of haze (ΔHaze) was measured for a sample having a size of 10x10 cm after 1000 cycles of wear testing under a load of 500 g using a CS-10F wheel by a Taber wear test method according to ASTM D1044.
(3) Pencil hardness: Pencil hardness was measured under a load of 500 g by the method according to ASTM D3363.
(4) Reliability: Cracking or peeling of a sample having a size of 10x10 cm was observed through visual inspection on a cut surface thereof after evaluation under the following conditions.
   (i) The sample was left at 50°C and RH 95% for 400 hours.
   (ii) The sample was left in boiling water at 100°C for 2 hours.
   (iii) Thermal cycling evaluation (maintaining at -30°C for 1 hour, followed by heating to 80°C and maintaining for 1 hour, 5 cycles)
(5) Tape adhesive test: Peeling of a film from a sample having a size of 10x10 cm was observed using a 3M tape according to ASTM D3359. (O: No peeling, X: Peeling occurred)
(6) Solvent resistance: A sample having a size of 10x10 cm was dipped into alcohol and gasoline at room temperature for 24 hours, followed by observation of transmittance (Tᵢₙᵢₜᵢₐₗ/T_{after} > 95%).
   Ⓞ: Very good, ○: Good, Δ: Insufficient, X: Very insufficient
(7) Impact strength (kgf·cm/cm): A 1/8" Izod specimen was made using an non-coated base layer and evaluated at room temperature according to ASTM D256.
(8) Elongation (%): A tensile specimen was made using a non-coated base layer and evaluated according to ASTM D638.

**Table 2**

| | | Example | | | | | Comparative Example | | |
|---|---|---|---|---|---|---|---|---|---|
| | | 1 | 2 | 3 | 4 | 5 | 1 | 2 | 3 |
| Coefficient of linear thermal expansion of base layer | | 56 | 51 | 47 | 42 | 39 | 60 | 58 | 35 |
| Coefficient of linear thermal expansion of coating layer | | 40 | 40 | 40 | 40 | 40 | 40 | 40 | 40 |
| Wear resistance (ΔHaze) | | 18 | 17 | 17 | 16 | 15 | 20 | 20 | 14 |
| Pencil hardness | | 5H | 6H | 6H | 6H | 6H | 5H | 5H | 6H |
| Reliability | (i) | OK | OK | OK | OK | OK | Peeled | Partially Peeled | OK |
| | (ii) | OK | OK | OK | OK | OK | | | OK |
| | (iii) | OK | OK | OK | OK | OK | | | OK |
| Tape adhesive test | | ○ | ○ | ○ | ○ | ○ | X | ○ | ○ |
| Solvent resistance | | Ⓞ | Ⓞ | Ⓞ | Ⓞ | Ⓞ | Δ | Δ | Ⓞ |
| Impact resistance | | 70 | 65 | 60 | 55 | 50 | 80 | 77 | 25 |
| Elongation (%) | | 105 | 95 | 85 | 75 | 70 | 110 | 105 | 30 |

As shown in Table 1, it can be seen that Examples 1∼5 exhibited improved interface stability by minimizing the difference in coefficient of linear thermal expansion between the base and the hard coating layer. On the contrary, for Comparative Example 1 in which conventional polycarbonate was applied, it could be seen that peeling occurred. For Comparative Examples 2 and 3 in which the amount of the biphenyl group was not within the inventive range, it could be seen that the plastic glazing had poor reliability or significantly deteriorated impact resistance and elongation.

Although some embodiments have been disclosed herein, it should be understood that these embodiments are provided by way of illustration only, and that various modifications, changes, and alterations can be made without departing from the scope of the invention. Therefore, the scope of the invention should be limited only by the accompanying claims and equivalents thereof.

## Claims

1. A plastic glazing comprising: a base layer; and a coating layer formed on one surface of the base layer,
wherein the base layer comprises polycarbonate containing a biphenyl group and the biphenyl group is present in an amount of 10 mol% to 50 mol% based on the total amount of polycarbonate, and
wherein the coating layer has a stack structure of a primer layer and a hard coating layer, in which the primer layer contacts the base layer.

2. The plastic glazing according to claim 1, wherein the polycarbonate containing a biphenyl group comprises repeated structures of Formulae 1 and 2, and the repeated structure of Formula 1 and the repeated structure of Formula 2 are present in a molar ratio of 50 to 90 : 10 to 50. 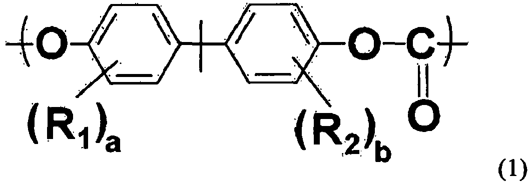 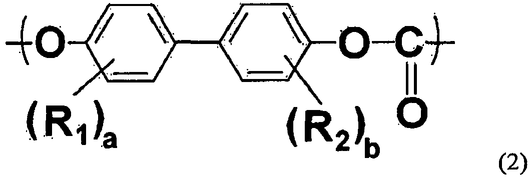 (wherein R₁ and R₂ are each independently halogen, a substituted or unsubstituted C₁ to C₆ alkyl group, or a substituted or unsubstituted C₆ to C₂₀ aryl group, and a and b are each independently an integer from 0 to 4).

3. The plastic glazing according to claim 1 or 2, wherein the base layer has a coefficient of linear thermal expansion ranging from 39 cm/cm/°C to 57 cm/cm/°C for a 6.4 mm flexural specimen according to ISO 11359.

4. The plastic glazing according to any of claims 1 to 3, wherein difference in coefficient of linear thermal expansion between the base layer and the coating layer is 16 cm/cm/°C or less.

5. The plastic glazing according to any of claims 1 to 4, wherein the primer layer comprises at least one of organopolysiloxane, acrylic, polyester, and acryl-polyester blend resins.

6. The plastic glazing according to any of claims 1 to 5, wherein the hard coating layer comprises at least one of silicone, urethane, epoxy, acrylic, polysiloxane, and polycarbonate grafted polysiloxane resins.

7. The plastic glazing according to claim 1, further comprising: an inorganic material layer formed on a surface of the hard coating layer, the inorganic material comprising at least one of aluminum oxide, barium fluoride, boron nitride, hafnium oxide, lanthanum fluoride, magnesium fluoride, magnesium oxide, scandium oxide, silicon monoxide, silicon dioxide, silicon nitride, silicon oxynitride, silicon oxycarbide, hydrogenated silicon oxycarbide, silicon carbide, tantalum oxide, titanium oxide, tin oxide, indium tin oxide, yttrium oxide, zinc oxide, zinc selenide, zinc sulfide, zirconium oxide, and zirconium titanate.

8. A method of preparing plastic glazing comprising:
forming a base layer using a polycarbonate resin containing a biphenyl group and the biphenyl group being present in an amount of 10 mol% to 50 mol% based on the total amount of polycarbonate;
forming a primer layer on a surface of the base layer; and
forming a hard coating layer on a surface of the primer layer.

9. The method according to claim 8, further comprising: a layer of compound on a surface of the hard coating layer, the compound comprising at least one of aluminum oxide, barium fluoride, boron nitride, hafnium oxide, lanthanum fluoride, magnesium fluoride, magnesium oxide, scandium oxide, silicon monoxide, silicon dioxide, silicon nitride, silicon oxynitride, silicon oxycarbide, hydrogenated silicon oxycarbide, silicon carbide, tantalum oxide, titanium oxide, tin oxide, indium tin oxide, yttrium oxide, zinc oxide, zinc selenide, zinc sulfide, zirconium oxide, zirconium titanate.

## Patentansprüche

1. Kunststoffverglasung bzw. Kunststoffglasierung, umfassend: eine Grundschicht;
und eine auf einer Oberfläche der Grundschicht gebildete Überzugsschicht, wobei die Grundschicht ein Polycarbonat umfasst, welches eine Biphenylgruppe enthält, und die Biphenylgruppe in einer Menge von 10 Mol-% bis 50 Mol-%, bezogen auf die Gesamtmenge an Polycarbonat, vorliegt und
wobei die Überzugsschicht eine Stapelstruktur aus einer Primärschicht und einer Hartüberzugsschicht bzw. Hartanstrichschicht aufweist, wobei die Primärschicht die Grundschicht berührt.

2. Kunststoffverglasung nach Anspruch 1, wobei das Polycarbonat eine Biphenylgruppe enthält, welche sich wiederholende Strukturen der Formeln 1 und 2 umfasst, und die sich wiederholende Struktur der Formel 1 und die sich wiederholende Struktur der Formel 2 in einem molaren Verhältnis von 50 bis 90 : 10 bis 50 vorliegen; 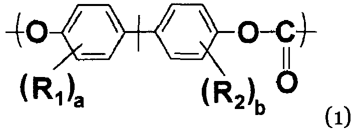 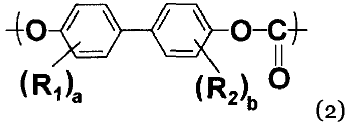 (wobei R₁ und R₂ jeweils unabhängig Halogen, eine substituierte oder unsubstitutierte C₁-bis C₆-Alkylgruppe oder eine substituierte oder unsubstituierte C₆-bis C₂₀-Arylgruppe sind, und a und b jeweils unabhängig eine ganze Zahl von o bis 4 sind).

3. Kunststoffverglasung nach Anspruch 1 oder 2, wobei die Grundschicht einen thermischen Längenausdehnungskoeffizienten im Bereich von 39 cm/cm/°C bis 57 cm/cm/°C für eine 6,4 mm Biegeprobe gemäß ISO 11359 aufweist.

4. Kunststoffverglasung nach irgendeinem der Ansprüche 1 bis 3, wobei der Unterschied im thermischen Längenausdehnungskoeffizienten zwischen der Grundschicht und der Überzugsschicht 16 cm/cm/°C oder weniger beträgt.

5. Kunststoffverglasung nach irgendeinem der Ansprüche 1 bis 4, wobei die Primärschicht wenigstens eines von Organopolysiloxan, Acryl, Polyester, und Acryl-Polyester-Gemisch-Harzen umfasst.

6. Kunststoffverglasung nach irgendeinem der Ansprüche 1 bis 5, wobei die Hartüberzugsschicht wenigstens eines von Silicon, Urethan, Epoxy, Acryl, Polysiloxan und Polycarbonat-gepfropften Polysiloxan-Harzen umfasst.

7. Kunststoffverglasung nach Anspruch 1, weiterhin umfassend: eine Schicht eines anorganischen Materials gebildet auf einer Oberfläche der Hartüberzugsschicht, wobei das anorganische Material wenigstens eines von Aluminiumoxid, Bariumfluorid, Bornitrid, Hafniumoxid, Lanthanfluorid, Magnesiumfluorid, Magnesiumoxid, Scandiumoxid, Siliciummonoxid, Siliciumdioxid, Siliciumnitrid, Siliciumoxynitrid, Siliciumoxycarbid, hydriertem Siliciumoxycarbid, Siliciumcarbid, Tantaloxid, Titanoxid, Zinnoxid, Indium-Zinn-Oxid, Yttriumoxid, Zinkoxid, Zinkselenid, Zinksulfid, Zirkoniumoxid und Zirkoniumtitanat umfasst.

8. Verfahren zur Herstellung einer Kunststoffverglasung, umfassend:
Bilden einer Grundschicht unter Verwendung eines Polycarbonatharzes, welches eine Biphenylgruppe enthält und die Biphenylgruppe in einer Menge von 10 Mol-% bis 50 Mol-%, bezogen auf die Gesamtmenge an Polycarbonat, vorliegt;
Bilden einer Primärschicht auf einer Oberfläche der Grundschicht; und
Bilden einer Hartüberzugsschicht bzw. Hartanstrichschicht auf einer Oberfläche der Primärschicht.

9. Verfahren nach Anspruch 8, weiterhin umfassend: eine Schicht einer Verbindung auf einer Oberfläche der Hartüberzugsschicht, wobei die Verbindung wenigstens eines von Aluminiumoxid, Bariumfluorid, Bornitrid, Hafniumoxid, Lanthanfluorid, Magnesiumfluorid, Magnesiumoxid, Scandiumoxid, Siliciummonoxid, Siliciumdioxid, Siliciumnitrid, Siliciumoxynitrid, Siliciumoxycarbid, hydriertem Siliciumoxycarbid, Siliciumcarbid, Tantaloxid, Titanoxid, Zinnoxid, Indium-Zinn-Oxid, Yttriumoxid, Zinkoxid, Zinkselenid, Zinksulfid, Zirkoniumoxid, Zirkoniumtitanat umfasst.

## Revendications

1. Vitrage plastique, comprenant : une couche de base ; et une couche de revêtement formée sur une surface de la couche de base,
dans lequel la couche de base comprend un polycarbonate contenant un groupe biphényle, et le groupe biphényle est présent en une quantité de 10 % en moles à 50 % en moles par rapport à la quantité totale du polycarbonate, et
dans lequel la couche de revêtement a une structure en empilement d'une couche primaire et d'une couche de revêtement dur, dans laquelle la couche primaire est en contact avec la couche de base.

2. Vitrage plastique selon la revendication 1, dans lequel le polycarbonate contenant un groupe biphényle comprend des structures répétitives de Formules 1 et 2, et la structure répétitive de Formule 1 et la structure répétitive de Formule 2 sont présentes selon un rapport en moles de 50 à 90:10 à 50. 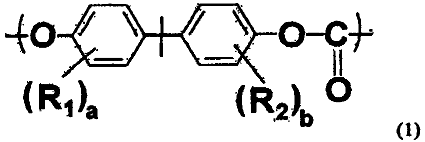 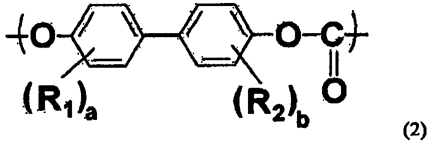 (où R₁ et R₂ représentent chacun indépendamment de l'autre un groupe halogéno, un groupe alkyle en C₁ à C₆ substitué ou non substitué, ou un groupe aryle en C₆ à C₂₀ substitué ou non substitué, et a et b représentent chacun indépendamment de l'autre un entier de 0 à 4).

3. Vitrage plastique selon la revendication 1 ou 2, dans lequel la couche de base a un coefficient de dilatation thermique linéique compris entre 39 cm/cm/°C et 57 cm/cm/°C pour une éprouvette en flexion de 6,4 mm selon ISO 11359.

4. Vitrage plastique selon l'une quelconque des revendications 1 à 3, dans lequel la différence de coefficient de dilatation thermique linéique entre la couche de base et la couche de revêtement est de 16 cm/cm/°C ou moins.

5. Vitrage plastique selon l'une quelconque des revendications 1 à 4, dans lequel la couche primaire comprend au moins l'une d'une résine d'organopolysiloxane, acrylique, de polyester, et d'un mélange acrylique-polyester.

6. Vitrage plastique selon l'une quelconque des revendications 1 à 5, dans lequel la couche de revêtement dur comprend au moins l'une d'une résine de silicone, d'uréthanne, époxy, acrylique, de polysiloxane, et de polysiloxane à greffage de polycarbonate.

7. Vitrage plastique selon la revendication 1, comprenant en outre une couche d'un matériau inorganique formée sur une surface de la couche de revêtement dur, le matériau inorganique comprenant au moins l'un de l'oxyde d'aluminium, du fluorure de baryum, du nitrure de bore, de l'oxyde de hafnium, du fluorure de lanthane, du fluorure de magnésium, de l'oxyde de magnésium, de l'oxyde de scandium, du monoxyde de silicium, du dioxyde de silicium, du nitrure de silicium, de l'oxynitrure de silicium, de l'oxycarbure de silicium, de l'oxycarbure de silicium hydrogéné, du carbure de silicium, de l'oxyde de tantale, de l'oxyde de titane, de l'oxyde d'étain, de l'oxyde d'indium et d'étain, de l'oxyde d'yttrium, de l'oxyde de zinc, du séléniure de zinc, du sulfure de zinc, de l'oxyde de zirconium et du titanate de zirconium.

8. Procédé de préparation d'un vitrage plastique, comprenant :
la formation d'une couche de base par utilisation d'une résine de polycarbonate contenant un groupe biphényle, le groupe biphényle étant présent en une quantité de 10 % en moles à 50 % en moles par rapport à la quantité totale du polycarbonate ;
la formation d'une couche primaire sur une surface de la couche de base ; et
la formation d'une couche de revêtement dur sur une surface de la couche primaire.

9. Procédé selon la revendication 1, comprenant en outre une couche d'un composé sur une surface de la couche de revêtement dur, le composé comprenant au moins l'un de l'oxyde d'aluminium, du fluorure de baryum, du nitrure de bore, de l'oxyde de hafnium, du fluorure de lanthane, du fluorure de magnésium, de l'oxyde de magnésium, de l'oxyde de scandium, du monoxyde de silicium, du dioxyde de silicium, du nitrure de silicium, de l'oxynitrure de silicium, de l'oxycarbure de silicium, de l'oxycarbure de silicium hydrogéné, du carbure de silicium, de l'oxyde de tantale, de l'oxyde de titane, de l'oxyde d'étain, de l'oxyde d'indium et d'étain, de l'oxyde d'yttrium, de l'oxyde de zinc, du séléniure de zinc, du sulfure de zinc, de l'oxyde de zirconium et du titanate de zirconium.
